**Europäisches Patentamt**

**European Patent Office**

**Office européen des brevets**

(11) Numéro de publication : **0 554 229 A1**

# (12) DEMANDE DE BREVET EUROPEEN

(21) Numéro de dépôt : **93870003.6**

(22) Date de dépôt : **12.01.93**

(51) Int. Cl.$^5$ : **B62D 53/08,** B60S 9/04, B60P 1/64

(30) Priorité : **29.01.92 BE 9200089**

(43) Date de publication de la demande : **04.08.93 Bulletin 93/31**

(84) Etats contractants désignés : **AT BE CH DE DK ES FR GB GR IT LI LU MC NL PT SE**

(71) Demandeur : **Volant, Claude** **105, Rue des Verriers** **B-7130 Binche (BE)**

(72) Inventeur : **Delsaux, Willy** **13 rue de l'Eglise** **6560 Hantes-Wiheries (BE)**

(74) Mandataire : **Plucker, Guy et al** **OFFICE KIRKPATRICK Avenue Wolfers, 32** **B-1310 La Hulpe (BE)**

(54) **Semi-remorque.**

(57) La semi-remorque (20) suivant l'invention comporte des béquilles (25) escamotables situées à proximité du bord avant de la semi-remorque (20) et à proximité des côtés longitudinaux de la semi-remorque (20), sa cheville ouvrière (24) étant positionnée de telle manière qu'au minimum 10% de la longueur de la semi-remorque soient en avant de la cheville (24).

Le but de l'invention est de fournir une semi-remorque (20), en particulier de 20 pieds de long, dont la charge est répartie sur le véhicule tracteur (3) pour une plus grande part qu'avec une semi-remorque suivant l'art antérieur, ce qui lui procure de meilleures performances routières.

Fig.2.

EP 0 554 229 A1

L'invention concerne une semi-remorque à laquelle est attelable un véhicule tracteur.

On connaît des semi-remorques comportant un, deux ou trois trains de roues vers la partie arrière et une partie avant sans roue apte à reposer sur l'arrière d'un véhicule tracteur. En avant des trains de roues de la semi-remorque est montée une paire de béquilles fixes et télescopiques aptes à soutenir la semi-remorque lorsqu'elle est décrochée du véhicule tracteur. La partie antérieure de la semi-remorque située devant les béquilles, et donc en porte à faux, doit être suffisamment longue pour permettre l'articulation de l'attelage tracteur/semi-remorque.

Sous sa partie antérieure en porte à faux, la semi-remorque comporte un organe d'accrochage, appelé cheville ouvrière, destiné à s'insérer dans la sellette du véhicule tracteur.

Parmi les nombreuses variantes de semi-remorque, on trouve les semi-remorques conventionnelles composées d'un châssis et d'un fourgeon fixe, des semi-remorques comportant uniquement un châssis porte-conteneurs, un châssis porte-caisses ou un châssis porte-bobine (aussi appelé porte-coil).

Les conteneurs ou les caisses amovibles ont classiquement des longueurs de 20 pieds (6,1 m), 30 pieds (9,15 m) ou 40 pieds (12,2 m). Ces conteneurs ou caisses amovibles peuvent également être transportés sur des remorques simples ou des véhicules spécialement conçus, appelés "porteurs".

Pour les semi-remorques de petites dimensions aptes à porter un conteneur de 20 pieds ou une bobine (coil), on est actuellement confronté à un problème de répartition de la charge.

En effet, il est indispensable que les camions puissent accoster les quais de déchargement, par l'arrière. Le bord arrière du conteneur doit donc légèrement dépasser ou au moins affleurer le bord arrière de la semi-remorque.

Avec la conception actuelle des courtes semi-remorques (environ 20 pieds) comportant deux longerons plus longs que le conteneur qu'elles sont aptes à porter, comportant une cheville située en avant du conteneur et comportant une béquille fixe derrière le porte-à-faux on obtient une très mauvaise répartition de la charge du conteneur.

En effet avec ce type de semi-remorque suivant l'art antérieur, la charge du conteneur est pour une grande partie supportée par la semi-remorque (au niveau des trains de roues arrière) et pour une faible partie par le véhicule tracteur (au niveau de la sellette).

Cette répartition de la charge engendre de médiocres performances routières, en particulier une mauvaise tenue de route. Lors du freinage sur route déformée ou même sur route plane, cette répartition est responsable de secousses répétées ou contre-coups aussi appelées dans la profession "coups de raquette", ou "coup de bêlier". Cette instabilité est due à une trop faible charge sur l'essieu arrière du véhicule tracteur.

Dans le cas de caisses amovibles portées par remorque ou par véhicule porteur, on connaît également des caisses béquillables. Ces caisses comportent deux paires de béquilles escamotables, une paire étant située vers l'avant de la caisse et l'autre, vers l'arrière. Pour permettre le dégagement du véhicule porteur, les deux béquilles d'une même paire en position de support, sont espacées d'une distance supérieure à la largeur de la caisse. Lorsque la caisse est supportée par le véhicule porteur, les béquilles sont escamotées horizontalement sous la caisse.

Par la demande de brevet n° DE-A-1 900 560, on connaît une semi-remorque comportant à l'avant des béquilles escamotables permettant à la semi-remorque de reposer sur le sol lorsque le tracteur est détaché.

Le but de l'invention est de fournir une semi-remorque, en particulier de 20 ou 25 pieds de long, procurant une meilleure répartition de la charge que suivant l'art antérieur. En particulier, le but de l'invention est de fournir une semi-remorque dont la charge est répartie sur le véhicule tracteur pour une plus grande partie qu'avec une semi-remorque suivant l'art antérieur.

Un des buts de l'invention est notamment de fournir une semi-remorque dont la projection au sol soit en substance contenue dans la projection au sol d'un conteneur que ladite semi-remorque est apte à porter.

De plus, un des buts de l'invention est de fournir une semi-remorque pouvant être déchargée à quai, par l'arrière.

Un but de l'invention est notamment de fournir une semi-remorque permettant à l'ensemble tracteur/semi-remorque de présenter de bonnes performances routières, en particulier une bonne adhérence au sol.

De plus, un but de l'invention est aussi de fournir une semi-remorque grâce à laquelle l'ensemble tracteur/semi-remorque soit plus compact, c'est-à-dire que, tout en utilisant le même véhicule tracteur et des caisses ou conteneurs de même longueur, on obtienne un ensemble tracteur/semi-remorque moins long et donc plus maniable.

Un autre but de l'invention est de fournir une semi-remorque évitant l'apparition de secousses répétées ou "coups de raquette"'.

Un des buts de l'invention est de fournir une semi-remorque stable après décrochage du véhicule tracteur.

Un autre but de l'invention est de fournir une semi-remorque adaptable aux différents types de véhicules tracteurs à deux essieux, conventionnels pour des semi-remorques de 20 pieds.

La présente invention a pour objet une semi-remorque à laquelle est attelable un véhicule tracteur, munie à sa partie avant de béquilles escamotables pouvant occuper une position de support ou une position escamotée, la cheville ouvrière étant positionnée de telle manière qu'au minimum 10% de la longueur de la semi-remorque soit situés en avant de la cheville. De cette manière la charge de la semi-remorque est mieux répartie. En particulier, une part de la charge, plus importante que suivant l'art antérieur, est reprise par le véhicule tracteur.

De préférence, au moins 15% de la longueur de la semi-remorque sont situés en avant de la cheville ouvrière.

Suivant un mode particulier de réalisation de l'invention, la semi-remorque est apte à porter un conteneur d'environ 20 pieds (6,1m).

Suivant un autre mode particulier de réalisation de l'invention, la semi-remorque est apte à porter une bobine.

Avantageusement, la semi-remorque suivant l'invention comporte deux béquilles situées chacune à proximité d'un côté longitudinal de la semi-remorque.

Suivant un mode préféré de réalisation de l'invention, les béquilles comportent un pied, un cylindre monté à la partie supérieure du pied et s'étendant perpendiculairement audit pied, et un manchon cylindrique de diamètre intérieur légèrement supérieur au diamètre extérieur du cylindre, le cylindre étant apte à être inséré et à tourner dans ledit manchon.

Dans une forme particulière de réalisation de l'invention, les béquilles comportent un dispositif de verrouillage, en position escamotée, comme en position de support. Ce dispositif comporte, de préférence, une goupille traversant le manchon et le cylindre, en substance, perpendiculairement à leur axe longitudinal, de manière à bloquer le manchon et le cylindre l'un par rapport à l'autre dans deux positions déterminées.

Suivant un mode avantageux d'exécution de l'invention, le manchon est fixé, en substance horizontalement, au châssis de la semi-remorque, l'axe du manchon étant en substance perpendiculaire à l'axe longitudinal de la semi-remorque.

En position escamotée, les béquilles sont, de préférence, situées, en substance horizontalement, sous la charge portée par la semi-remorque.

Avantageusement, la semi-remorque suivant l'invention comporte un système de maintien des béquilles en position escamotée.

En position de support, le pied des béquilles s'étend, de préférence, sensiblement à la verticale, le cylindre étant en partie retiré hors du manchon, de telle sorte que le pied soit en dehors de l'espace situé sous la semi-remorque et de manière à laisser un espace libre suffisant entre le pied de chaque béquille pour permettre le passage de la partie du véhicule tracteur apte à se placer sous la semi-remorque.

Suivant un mode de réalisation particulier de l'invention, les béquilles comportent une entretoise comportant deux extrémités, apte à maintenir la béquille en position de support.

De préférence, ladite entretoise est montée pivotante par une de ses deux extrémités sur le pied de la béquille. L'autre extrémité étant appelée extrémité libre.

Lorsque la béquille est en position de support, ladite entretoise est, de préférence, apte à être fixée par son extrémité libre, au châssis de la semi-remorque de manière à maintenir la béquille en position de support.

Dans un mode de réalisation particulier, le système de maintien des béquilles en position escamotée consiste en une traverse horizontale disposée perpendiculairement à l'axe longitudinal de la semi-remorque et ayant une longueur sensiblement égale à la largeur du conteneur. A proximité de chaque extrémité de cette traverse est ménagée une encoche dans laquelle le pied de chaque béquille est apte à se loger.

D'autres particularités et avantages de l'invention ressortiront de la description faite ci-après d'une forme d'exécution particulière, référence étant faite aux dessins annexés, dans lesquels :

la Fig. 1 est une vue en élévation d'un attelage composé d'un véhicule tracteur et d'une semi-remorque du type châssis porte-conteneur suivant l'état de la technique, portant un conteneur de 20 pieds.

la Fig. 2 est une vue similaire à celle de la Fig. 1 d'un attelage comportant une semi-remorque suivant l'invention;

la Fig. 3 est une vue en plan, lors d'un braquage, de l'attelage représenté à la Fig. 1;

la Fig. 4 est une vue similaire à celle de la Fig. 3, de l'attelage représenté à la Fig. 2;

la Fig. 5 est une vue en plan de la semi-remorque suivant l'invention, les béquilles étant en position escamotée;

la Fig. 6 est une vue similaire à celle de la Fig. 5, les béquilles étant en position de support;

la Fig. 7 est une vue en élévation de la semi-remorque suivant l'invention, les béquilles étant en position de support;

la Fig. 8 est une vue partielle de l'arrière de la semi-remorque, les béquilles étant en position de support, l'entretoise n'étant pas représentée, et

la Fig. 9 est une vue en perspective des béquilles et de leur système de maintien en position escamotée. Les béquilles sont à la fois représentées en position escamotée (traits pleins) et en position de support (traits mixtes).

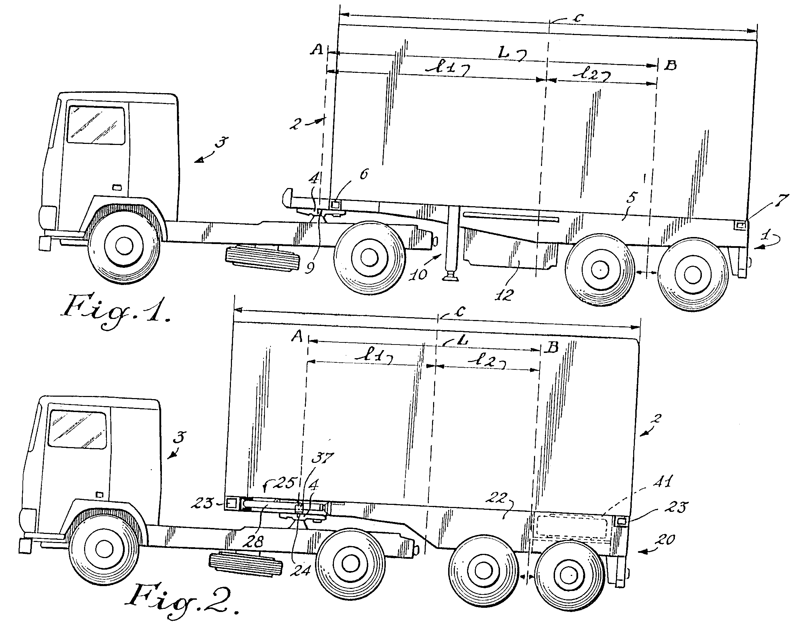

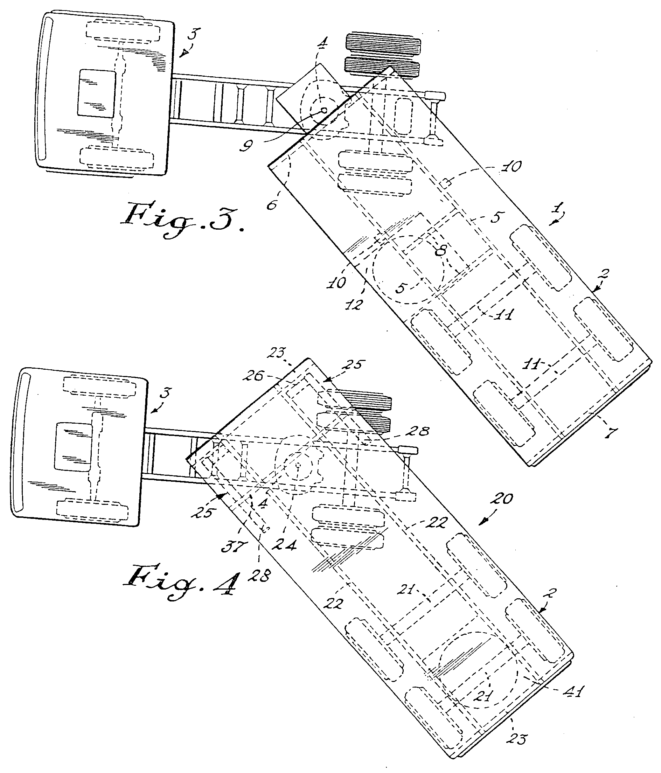

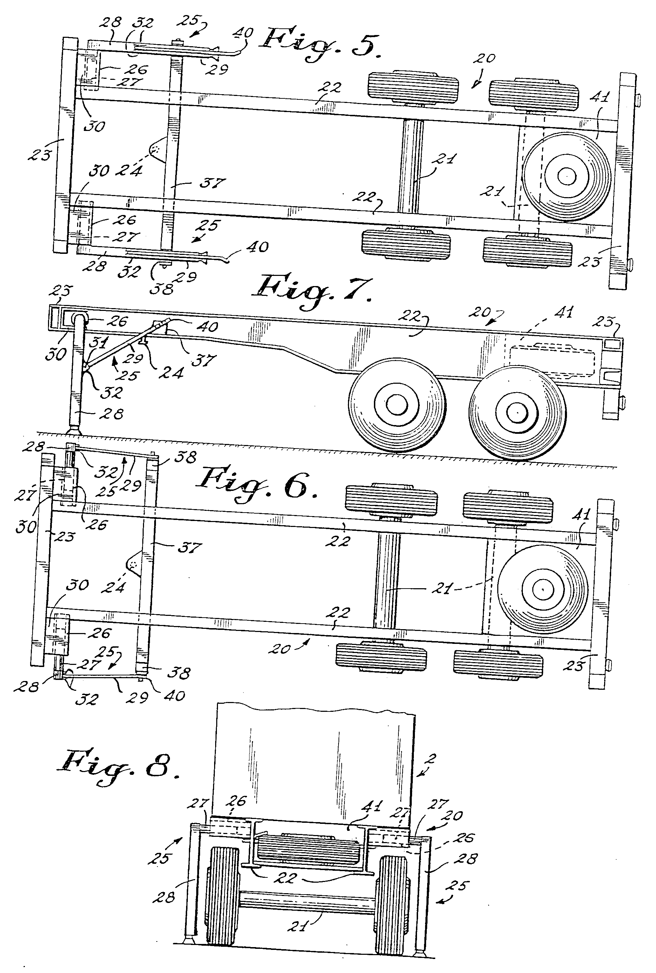

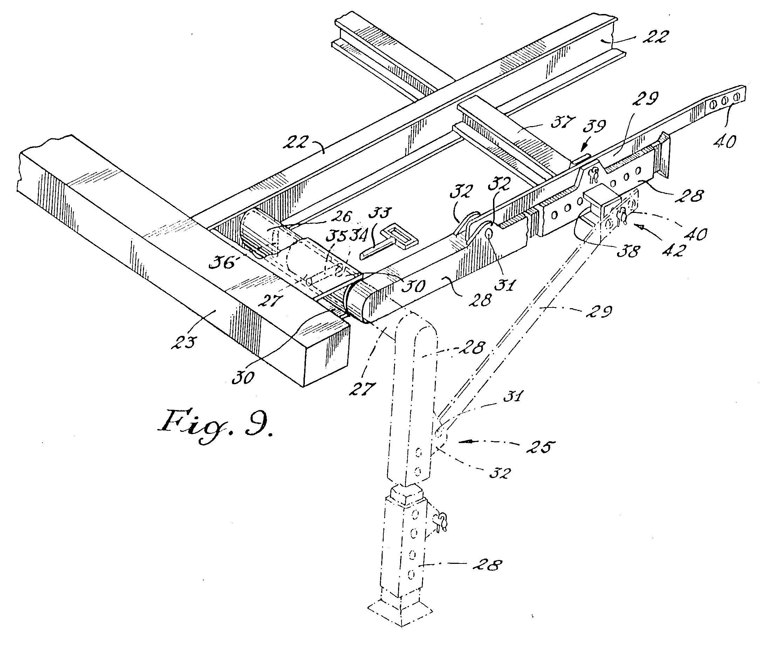

Les Fig. 1 et 3 représentent une semi-remorque 1 de type châssis porte-conteneur, suivant l'art antérieur portant un conteneur 2 de 20 pieds. A cette semi-remorque 1 est attelé un véhicule tracteur 3 à un seul essieu arrière, muni d'une sellette 4.

La semi-remorque 1 suivant l'art antérieur comporte deux essieux montés jumelés. Son châssis comporte deux longerons 5 rectilignes de longueur supérieure à la longueur du conteneur 2, deux traverses porte-conteneur renforcées 6, 7 disposées perpendiculairement aux longerons 5. La traverse porte-conteneur avant 6 est apte à supporter le bord avant du conteneur 2 et la traverse porte-conteneur arrière 7, le bord arrière du conteneur 2. Ces traverses 6, 7 ont la même longueur que la largeur du conteneur 2. Le châssis comporte encore des traverses 8 intermédiaires disposées perpendiculairement aux longerons 5, situées entre les deux traverses porte-conteneur 6, 7 et s'étendant d'un longeron 5 à l'autre. La semi-remorque 1 est munie d'une cheville 9 fixée au châssis, s'étendant vers le bas et disposée en avant de la traverse porte-conteneur avant 6.

L'attelage du véhicule tracteur 3 à la semi-remorque 1 est réalisé par la fixation de la cheville 9 de la semi-remorque 1 dans la sellette 4 du véhicule tracteur 3.

Cette disposition de la cheville 9 en avant de la traverse porte-conteneur avant 6 implique que seulement environ un quart de la longueur du conteneur 2 est situé au-dessus du véhicule tracteur 3 lorsque la semi-remorque 1 est attelée et que toute la charge que la semi-remorque 1 est située en arrière du point d'articulation cheville 9/sellette 4.

La semi-remorque 1 comporte encore deux béquilles 10 verticales fixées chacune à un longeron 5 du châssis de la semi-remorque 1. Ces béquilles 10 sont télescopiques. Approximativement, les deux-tiers de la longueur du conteneur 2 sont disposés en arrière des béquilles 10 et un tiers de la longueur est disposé en avant des béquilles et est donc en porte à faux.

La semi-remorque 1 comporte encore, entre les béquilles 10 et l'essieu arrière 11 disposé le plus en avant, un casier 12 porte-roue de rechange.

La longueur hors tout de la semi-remorque 1 est de 6,78 m.

Les Fig. 2 et 4 représentent un attelage composé d'une semi-remorque 20 suivant l'invention et d'un véhicule tracteur 3 identique à celui qui est représenté aux Fig. 1 et 3. La semi-remorque 20 est de type châssis porte-conteneur pour un conteneur 2 de 20 pieds et de type à deux essieux arrière 21.

Son châssis comporte deux longerons 22 rectilignes et deux traverses 23 porte-conteneur disposées perpendiculairement aux longerons 22, une à leur extrémité avant et l'autre à leur extrémité arrière. Les traverses 23 ont une longueur égale à la largeur du conteneur 2 et sont espacées de manière telle qu'elles supportent respectivement le bord avant et le bord arrière du conteneur 2, les longerons 22 ayant une longueur sensiblement égale à la longueur du conteneur 2. Les longerons 22 présentent environ à la moitié de leur longueur un bec de cygne, c'est-à-dire un agrandissement de la hauteur du longeron.

La cheville 24 est disposée environ 1 mètre en arrière de la traverse 23 porte-conteneur avant. La semi-remorque 20 comporte également un casier 41 porte-roue de rechange situé à proximité du bord arrière de la semi-remorque 20.

La longueur hors tout de la semi-remorque 20 est de 6,100 m.

La semi-remorque 20 est munie à proximité de ses côtés longitudinaux et de son bord avant de béquilles 25 escamotables. Les béquilles 25 comportent un manchon 26, un cylindre 27, un pied 28 de section carrée et une entretoise 29 (fig. 5 à 9).

Le manchon 26 est un cylindre creux de diamètre intérieur légèrement plus grand que le diamètre extérieur du cylindre 27 et de longueur égale ou légèrement supérieure à la longueur du cylindre 27, le cylindre 27 devant pouvoir coulisser et tourner dans le manchon 26. Le manchon 26 s'étend horizontalement, du longeron 22 vers l'extérieur de la semi-remorque 20, en substance perpendiculairement à ce longeron 22. Sa longueur est inférieure à la distance séparant le longeron 22 du bord extérieur du conteneur 2. Le manchon 26 est fixé au longeron 22 et fixé à la traverse 23 avant par l'intermédiaire de deux plaques horizontales 30. L'une passe en-dessous du manchon 26 et l'autre au-dessus du manchon 26 (voir fig. 9).

Le cylindre 27 est inséré dans le manchon 26 et soudé par une de ses deux extrémités, à la partie supérieure du pied 28.

Le pied 28 est un tube de section carrée et de longueur sensiblement égale à la distance séparant le longeron 22 du sol. La partie inférieure du pied 28 peut également comporter une base, un peu plus large que la section du pied. Le pied 28 peut également comporter une partie télescopique de manière que l'on puisse ajuster sa longueur.

L'entretoise 29 est une barre métallique fixée pivotante par une de ses deux extrémités au pied 28 de la béquille 25. L'autre extrémité étant appelée extrémité libre 40. La fixation pivotante de l'entretoise 29 sur le pied 28 est réalisée par l'intermédiaire d'un axe 31 passant dans un trou ménagé près de l'extrémité pivotante de l'entretoise 29. L'axe 31 est fixé au pied 28 grâce à deux protubérances 32 le maintenant parallèlement à la surface du pied 28 et perpendiculairement à l'axe longitudinal du pied 28.

Un dispositif de verrouillage est prévu pour bloquer les béquilles en position escamotée ou en position de support. Ce dispositif comprend une goupille 33 traversant de part en part le manchon 26 et le cylindre 27, en les maintenant dans une position déterminée l'un par rapport à l'autre. Deux ouvertures circulaires 34 sont ménagés dans le manchon pour permettre le passage de la goupille 33. Une trouée 35 est ménagée dans le cylindre 27, en regard des ouvertures 34 lorsque la béquille 25 est en position escamotée et une seconde trouée 36 est ménagée dans le cylindre 27, en regard des ouvetures 34 lorsque la béquille 25 est en position de support.

Les Fig. 2 et 5 montrent les béquilles 25 en position escamotée. Le cylindre 27 est entièrement inséré dans le manchon 26. Le pied 28 et l'entretoise 29 sont disposés horizontalement et situés dans l'espace se situant sous le conteneur 2.

Pour maintenir les béquilles 25 dans cette position, la semi-remorque 20 suivant l'invention est encore munie d'une traverse 37 traversant les longerons 22 et s'étendant perpendiculairement à ceux-ci. La longueur de la traverse 37 est sensiblement égale à la largeur du conteneur 2.

A proximité de chaque extrémité de cette traverse 37 est ménagée une encoche 38, de forme rectangulaire. L'encoche 38 est ménagée dans toute la largeur de la traverse 37 et a une forme telle qu'elle constitue un "berceau" où le pied 28 de la béquille 25 peut se loger, lorsque celle-ci est en position escamotée.

Une deuxième encoche peut être prévue pour loger et fixer l'entretoise 29, lorsque la béquille 25 est en position escamotée. L'entretoise 29 peut également être fixée sur le pied par un système de fixation 39 approprié.

Pour placer les béquilles 25 en position de support, il faut libérer l'entretoise 29 de son système de fixation 39; libérer le pied 28 de son encoche 38; tirer le pied 28 vers l'extérieur de manière à le placer en dehors de l'espace situé sous le conteneur, en retirant en partie le cylindre 27 hors du manchon 26; faire tourner le pied 28 de 90° de manière à le positionner verticalement, le cylindre 27 effectuant une rotation dans le manchon 26, et enfin fixer l'extrémité libre 40 de l'entretoise 29 à l'extrémité de la traverse 37 de manière à maintenir le pied 28 dans sa position de support. Divers systèmes de fixation 42 pourraient être imaginés par l'homme de métier.

Les deux béquilles 25 étant posées, le véhicule tracteur 3 peut être décroché et libéré.

Un exemple comparé de calcul de répartition de la charge est donné ci-après, pour un conteneur 2 de 24 tonnes et de 6,1 m de long. Les premiers calculs concernent une semi-remorque 1 suivant l'art antérieur telle que représentée à la Fig. 1. Les deuxièmes concernent une semi-remorque 20 suivant l'invention telle que représentée à la Fig. 2.

La répartition de la charge (P) du conteneur 2 sur le véhicule tracteur 3, et sur le train arrière de la semi-remorque, est donnée par les formules suivantes :

$$chA = P \times \frac{l_2}{L} \quad (I)$$

$$chB = P \times \frac{l_1}{L} \quad (II)$$

où chA est la partie de la charge (P) du conteneur 2 appliquée sur le véhicule tracteur 3 (point A);

chB est la partie de la charge (P) du conteneur 2 appliquée sur le train arrière de la semi-remorque (point B);

P est le poids total du conteneur (ou autre charge portée par la semi-remorque);

L est la distance entre les points A et B;

$l_1$ est la distance entre le point A et le point central de la charge (point C);

$l_2$ est la distance entre le point B et le point central de la charge (point C).

Pour ce calcul, on considère que la charge est homogènement répartie dans le conteneur 2, le point C est alors situé au centre du conteneur. On considère encore que la charge appliquée sur le train arrière (chB) est appliquée en un point situé à mi-distance entre les deux essieux 11, 21 et la charge (chA) appliquée sur le véhicule tracteur 3 est appliquée en un point situé au centre de la cheville 9, 24 lorsque celle-ci est bloquée dans la sellette 4 du véhicule tracteur 3.

1°) En ce qui concerne la semi-remorque 1 suivant l'art antérieur :

la distance L est de 4,730 m

la distance $l_1$ est de 3,173 m

la distance $l_2$ est de 1,557 m.

En utilisant la formule I, la charge (chA) appliquée sur le véhicule tracteur 3 est de :

$$24\ 000\ \text{kg} \times \frac{1{,}557}{4{,}730} = 7900\text{kg}$$

La charge (chB) appliquée sur le train arrière de la semi-remorque 1, calculé à l'aide de la formule II s'élève à :

$$24\ 000\ \text{kg} \times \frac{3{,}173}{4{,}730} = 16\ 100\ \text{kg}$$

2°) En ce qui concerne la semi-remorque 20 suivant l'invention :

la distance L est de 3,465 m

la distance $l_1$ est de 1,900 m

la distance $l_2$ est de 1,565 m

La charge (chA) appliquée sur le véhicule tracteur 3, calculée à l'aide de la formule I, s'élève à :

$$24\ 000\ \text{kg} \times \frac{1{,}565}{3{,}465} = 10\ 840\ \text{kg}$$

La charge (chB) appliquée sur le train arrière de la semi-remorque 20, calculée à l'aide de la formule II s'élève à :

$$24\ 000\ \text{kg} \times \frac{1{,}900}{3{,}465} = 13\ 160\ \text{kg}$$

Le tableau suivant reprend ces résultats.

| | Charge sur le véhicule tracteur 3 (kg) | Charge sur la semi-remorque 1, 20 (kg) | Charge totale (kg) |
|---|---|---|---|
| Art antérieur | 7 900 (33%) | 16 100 (67%) | 24 000 |
| Invention | 10 840 (45%) | 13 160 (55%) | 24 000 |
| Gain | +2 940 | -2 940 | |

On constate donc que pour obtenir une charge répartie au maximum sur le véhicule tracteur le rapport $l_2/2$ doit être le plus grand possible et le rapport $l_1/L$ le plus petit possible.

Dans le cas expliqué ci-dessus, comparant deux semi-remorques à deux essieux, de type châssis porte-conteneur, portant un même conteneur 2 de 24 tonnes et attelées à un même type de véhicule tracteur 3, l'invention permet un déplacement de près de 3 tonnes de charge de la semi-remorque vers le véhicule tracteur.

Alors qu'avec la semi-remorque 1 suivant l'art antérieur, moins d'un tiers de la charge du conteneur 2 était appliqué sur le véhicule tracteur 3, avec la semi-remorque 20 suivant l'invention, 45% de la charge du conteneur 2 sont appliqués sur le véhicule tracteur 3.

Ceci procure incontestablement à l'attelage tracteur 3/semi-remorque 20 suivant l'invention, de bien meilleures performances routières. Cela évite notamment le phénomène de coups de raquette et procure une meilleure adhérence, en respectant les normes imposées par la réglementation CEE en vigueur.

Il est entendu que ces calculs de répartition de charge sont donnés à titre d'exemple. D'autres valeurs pourraient être obtenues avec une semi-remorque suivant l'invention en faisant varier la position de la cheville 24.

En effet, la position de la cheville 24 peut varier, car elle n'est pas conditionnée comme pour la semi-remorque 1 suivant l'art antérieur, par la longueur minimum de porte à faux nécessaire pour l'articulation de l'attelage et par la longueur maximum de porte à faux tolérable en avant de la béquille 10 pour conserver une semi-remorque stable lorsqu'elle est posée sur béquille.

Un autre avantage de l'invention est de fournir un attelage tracteur/semi-remorque plus court. Dans l'exemple détaillé ci-dessus, on obtient un gain de 1,27 m de longueur totale. La semi-remorque suivant l'invention procure donc un attelage moins encombrant, plus maniable, ayant un plus faible rayon de braquage et une plus petite surface au sol.

**Revendications**

1.- Semi-remorque (20) de longueur inférieure ou égale à 25 pieds (7,6m), munie à sa partie avant de béquilles (25) escamotables, caractérisée en ce que la cheville ouvrière (24) est positionnée de telle manière qu'au minimum 10% de la longueur de la semi-remorque (20) soit situé en avant de la cheville (24).

2.- Semi-remorque suivant la revendication 1, caractérisée en ce qu'au minimum 15% de sa longueur sont situés en avant de la cheville (24).

**3.-** Semi-remorque suivant l'une quelconque des revendications 1 ou 2, caractérisée en ce qu'elle est apte à porter un conteneur (2) de 20 pieds (6,1m).

**4.-** Semi-remorque suivant l'une quelconque des revendications 1 ou 2, caractérisée en ce qu'elle est apte à porter une bobine.

**5.-** Semi-remorque suivant l'une quelconque des revendications précédentes, caractérisée en ce que les béquilles (25) comportent un pied (28), un cylindre (27) monté à la partie supérieure du pied (28) et s'étendant perpendiculairement audit pied (28), les béquilles (25) comportant un manchon cylindrique (26) de diamètre intérieur légèrement supérieur au diamètre extérieur du cylindre (27), le cylindre (27) étant apte à être inséré et à tourner dans ledit manchon (26).

**6.-** Semi-remorque suivant la revendication 5, caractérisée en ce que les béquilles (25) comportent un dispositif de verrouillage en position escamotée et en position de support.

**7.-** Semi-remorque suivant la revendication 6, caractérisée en ce que ledit dispositif de verrouillage comporte une goupille (33) traversant le manchon (26) et le cylindre (27) en substance perpendiculairement à leur axe longitudinal.

**8.-** Semi-remorque suivant la revendication 5, caractérisée en ce que ledit manchon (26) est fixé en substance horizontalement au châssis de la semi-remorque (20), l'axe du manchon (26) étant en substance perpendiculaire à l'axe longitudinal de la semi-remorque (20).

**9.-** Semi-remorque suivant l'une quelconque des revendications précédentes, caractérisée en ce que, en position escamotée, les béquilles (25) sont situées en substance horizontalement, sous la charge portée par la semi-remorque (20).

**10.-** Semi-remorque suivant l'une quelconque des revendications précédentes, caractérisée en ce qu'elle comporte un système de maintien des béquilles (25) en position escamotée.

**11.-** Semi-remorque suivant la revendication 10, caractérisée en ce que le système de maintien des béquilles (25) en position escamotée comporte une traverse (37) horizontale disposée perpendiculairement à l'axe longitudinal de la semi-remorque (20), une encoche (38) étant ménagée à chacune de ses extrémités dans laquelle le pied (28) de la béquille (25) est apte à venir se loger.

**12.-** Semi-remorque suivant l'une quelconque des revendications précédentes, caractérisée en ce que, en position de support, le pied (28) des béquilles (25) s'étend sensiblement à la verticale, le cylindre (27) étant en partie retiré hors du manchon (26), de telle sorte que le pied (28) soit en dehors de l'espace situé sous la semi-remorque (20) et de manière à laisser un espace libre suffisant entre les pieds (28) respectifs des béquilles (25) pour permettre le passage de la partie du véhicule tracteur (3) apte à se placer sous la semi-remorque (20).

**13.-** Semi-remorque suivant l'une quelconque des revendications précédentes, caractérisée en ce que les béquilles (25) comportent une entretoise (29) comportant deux extrémités.

**14.-** Semi-remorque suivant la revendication 13, caractérisée en ce que ladite entretoise (29) est montée pivotante par une de ses deux extrémités sur le pied (28) de la béquille (25), l'autre extrémité étant appelée extrémité libre (40).

**15.-** Semi-remorque suivant la revendication 14, caractérisée en ce que, lorsque la béquille (25) est en position de support, ladite entretoise (29) est apte à être fixée par son extrémité libre (40), au châssis de la semi-remorque (20).

Fig.1.

Fig.2.

Fig.3.

Fig. 4

Fig. 5.

Fig. 7.

Fig. 6.

Fig. 8.

Fig. 9.

Office européen
des brevets

**RAPPORT DE RECHERCHE EUROPEENNE**

Numero de la demande

EP    93 87 0003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X<br>Y | DE-U-1 954 743 (HERBERT VIDAL)<br>* figures 1-3 *<br><br>* page 3, ligne 18 - page 5, ligne 2 *<br>--- | 1-3,9,10<br>4-8,<br>11-15 | B62D53/08<br>B60S9/04<br>B60P1/64 |
| Y | US-A-4 945 938 (PONSFORD ET AL)<br>* figures 8,9 *<br>* colonne 3, ligne 23 - ligne 38 *<br>* colonne 8, ligne 34 - ligne 37 *<br>--- | 4 | |
| Y<br>A | GB-A-2 151 998 (PERRIN STEVENS)<br>* le document en entier *<br>--- | 5-8<br>12 | |
| Y<br>A | FR-A-2 327 115 (BERGER)<br>* le document en entier *<br>--- | 11-15<br>5,6,8-10 | |
| X | EP-A-0 094 701 (AGAM METAL WORKS)<br>* abrégé; figures 1,3 *<br>* page 1, ligne 1 - page 2, ligne 8 *<br>--- | 1-3,9,10 | |
| A | US-A-2 553 959 (COOK ET AL)<br>* revendications 1,2,4; figures 1,2 *<br>* colonne 1, ligne 1 - ligne 27 *<br>* colonne 2, ligne 24 - colonne 3, ligne 17 *<br>* colonne 5, ligne 18 - ligne 55 *<br>--- | 1 | **DOMAINES TECHNIQUES RECHERCHES (Int. Cl.5 )**<br><br>B62D<br>B60P<br>B60S |
| A,D | DE-A-1 900 560 (VAN DOORNE'S AANHANGWAGENFABRIEK)<br>* le document en entier *<br>--- | 5,6,<br>8-10,12 | |
| A | DE-A-2 601 834 (FORSS-PARATOR)<br><br>* le document en entier *<br><br>----- | 5,6,<br>8-10,<br>12-15 | |

Le présent rapport a été établi pour toutes les revendications

| Lieu de la recherche | Date d'achèvement de la recherche | Examinateur |
|---|---|---|
| LA HAYE | 28 AVRIL 1993 | WESTLAND P.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)